# EUROPÄISCHE PATENTSCHRIFT

(11) **EP 0 863 319 B1**
(45) Veröffentlichungstag und Bekanntmachung des Hinweises auf die Patenterteilung: **29.03.2000**
(21) Anmeldenummer: 97122658.4
(22) Anmeldetag: 22.12.1997
(51) Int. Cl.: F16B 13/08

(54) **Befestigungselement mit Spreizelement**
Fastening device having a spreading element
Dispositif de fixation ayant un élément d'expansion

(30) Priorität: 03.03.1997 DE 19708511
(43) Veröffentlichungstag der Anmeldung: 09.09.1998
(73) Patentinhaber: fischerwerke Artur Fischer GmbH & Co. KG, 72178 Waldachtal (DE)
(72) Erfinder: Fischer, Artur, Prof. Dr. h.c.Dr.-Ing. E.h., 72178 Waldachtal (DE)

(56) Entgegenhaltungen:
- EP-A- 0 182 741
- EP-A- 0 685 656
- DE-A- 19 536 786

## Beschreibung

Die Erfindung betrifft ein Befestigungselement mit einem an seinem hinteren Ende ein Innengewinde für eine Schraube aufweisenden Dübelkörper und einem keilförmigen Spreizelement gemäß der Gattung des Anspruches 1.

Aus der DE 195 36 786 A1 ist ein gattungsgemäßes Befestigungselement mit einem hülsenförmigen Dübelkörper bekannt. Der Dübelkörper weist eine zum vorderen Ende ansteigende und zum hinteren Ende hin durch eine Anschlagschulter begrenzte Längsnut auf, in der das Spreizelement mit der Schraube oder einem Einschlagwerkzeug zum vorderen Ende hin zur Verankerung des Befestigungselementes verschiebbar ist. Beim Verankerungsvorgang stößt die Stirnseite der Schraube bzw. des Einschlagwerkzeuges an dem Abschnitt der hinteren Stirnfläche des Spreizelementes an, der in die sich an das Innengewinde des Befestigungselementes anschließende Bohrung hineinragt.

Bei der Verschiebung bewegt sich das Spreizelement auf der ansteigenden Längsnut sowohl zum vorderen Ende des Spreizkörpers als auch gleichzeitig radial nach außen. Die sich an das Innengewinde anschließende Bohrung muß sich daher mindestens um den für eine ordnungsgemäße Verankerung erforderlichen Eintreibweg des Spreizelementes in die Längsnut erstrecken. Dadurch wird die Auflagefläche für das Spreizelement verkürzt, so daß sich eine hohe Flächenpressung beim Verankerungsvorgang ergibt, die unter Umständen zu einem Kaltverschweißen führt. Dies erhöht einerseits die Eintreibenergie und beeinträchtigt andererseits die Nachspreizfunktion des bekannten Befestigungselementes, so daß dessen Eignung in der Zugzone, in der Risse auftreten können, in Frage gestellt ist. Ferner verkleinert sich durch die gleichzeitig auftretende radiale Verschiebung des Spreizelementes die Angriffsfläche für die Schraube bzw. dem Einschlagwerkzeug, so daß eine Beschädigung der hinteren Stirnfläche des Spreizelementes eintreten kann und die notwendige Eintreibkraft auf das Spreizelement nicht übertragbar ist. Das Beschädigungsrisiko bei dem Spreizelement wird noch dadurch erhöht, daß die Angriffsfläche für das Einschlagwerkzeug schräg zur Eintreibrichtung steht.

Der Erfindung liegt die Aufgabe zugrunde, eine Befestigungselement der eingangsgenannten Gattung derart zu verbessern, daß die oben genannten Nachteile vermieden sind.

Die Lösung dieser Aufgabe wird durch die in Anspruch 1 angegebenen Merkmale erreicht. Das in der Längsnut geführte keilförmige Spreizelement stützt sich beim Eintreiben des Dübelkörpers in ein vorbereitetes Bohrloch im Verankerungsgrund mit einem Teil seiner hinteren Stirnfläche an der die Längsnut begrenzenden Anschlagschulter in seiner tiefsten Position ab. In dieser Position ragt der sich zum hinteren Ende des Dübelkörpers erstreckende Fortsatz in die sich an das Innengewinde anschließende Bohrung hinein. Die Länge der an der Auflagefläche des Spreizelementes sich anschließenden Längskante des Fortsatzes entspricht dabei mindestens dem Eintreibweg des Spreizelementes. Die Ausbildung eines solchen Fortsatzes am Spreizelement ermöglicht es, die Länge der sich an das Innengewinde anschließenden Bohrung bis an den Anfang der Längsnut zu begrenzen. Damit liegt das Spreizelement mit seiner Auflagefläche vollständig auf der Grundfläche der Längsnut auf, so daß beim Verankerungsvorgang nur eine geringe Flächenpressung entsteht und eine Kaltverschweißung verhindert wird. Des weiteren steht durch die rechtwinklig zur Längsachse des Dübelkörpers stehende Stirnfläche des Fortsatzes eine Angriffsfläche für das Einschlagwerkzeug zur Verfügung, die eine optimale Übertragung der Eintreibenergie auf das Spreizelement gewährleistet. Des weiteren kann der Anstiegwinkel der Gleitfläche relativ flach gewählt werden, da ein ausreichender Eintreibweg durch den Fortsatz zur Verfügung steht. Durch den flacheren Anstieg der Gleitfläche wird sowohl das Gleitverhalten und somit der Nachspreizeffekt bei Auftreten von Rissen begünstigt als auch die zur Verankerung erforderliche Eintreibenergie reduziert.

In Ergänzung der Erfindung kann die sich an das Innengewinde anschließende Bohrung im Durchmesser der Kernbohrung des Innengewindes entsprechen. Damit steht ein größtmöglicher Durchmesser für den Schlagdorn des Einschlagwerkzeuges und für die Abmessung der Stirnfläche des Fortsatzes zur Verfügung.

Ferner ist es zweckmäßig, daß das Spreizelement eine glatte, den Durchmesser des Dübelkörpers leicht überragende Spreizfläche und Einkerbungen an den Seitenrändern der Spreizfläche aufweist. Durch die glatte Spreizfläche wir vermieden, daß beim Eintreiben des Spreizelementes in der Bohrlochwandung eine Nut ausgerieben wird, die unter Umständen den Haltewert reduziert. Es hat sich gezeigt, daß Einkerbungen an den Seitenrändern der Spreizfläche günstiger sind und höhere Haltewerte ermöglichen.

Als ebenfalls zweckmäßig hat sich erwiesen, die Spreizfläche des Spreizelementes im vorderen Bereich auf den Durchmesser des Dübelkörpers stufenförmig abzusetzen. Damit läßt sich das Befestigungselement leichter am Bohrlochrand ansetzen und ein Verkanten des Spreizelementes beim Setzen des Befestigungselementes vermeiden.

In der Zeichnung ist die Erfindung anhand eines Ausführungsbeispieles dargestellt.

Es zeigen:
- Figur 1: einen Längsschnitt des Befestigungselementes beim Verankerungsvorgang mit einem Einschlagwerkzeug,
- Figur 2: einen Querschnitt des Befestigungselementes nach Figur 1 gemäß der Schnittlinie A - A und
- Figur 3: das Befestigungselement mit eingedrehter Befestigungsschraube

Das Befestigungselement besteht aus dem Dübelkörper 1 und dem keilförmigen Spreizelement 2, das in einer Längsnut 3 verschiebbar geführt ist, die eine zum vorderen Ende ansteigende Grundfläche 4 und eine ihr hinteres Ende begrenzende Anschlagschulter 5 aufweist. Der Dübelkörper 1 ist an seinem hinteren Ende mit einem Innengewinde 6 versehen. Die Kernbohrung 7 des Innengewindes 6 erstreckt sich über die Anschlagschulter 5 hinaus bis zum Anfang der Längsnut 3. Der am Spreizelement 2 angeordnete Fortsatz 8 ragt in die Kernbohrung 7 hinein, wobei die sich an der Auflagefläche 9 des Spreizelementes 2 anschließende Längskante 10 des Fortsatzes 8 mindestens dem Eintreibweg des Spreizelementes 2 entspricht. Damit ist sichergestellt, daß beim Eintreiben des Spreizelementes 2 der Schlagdorn 11 des Eintreibwerkzeuges 12 nicht auf den Grund der Kernbohrung 7 auftrifft. Die rechtwinklig zur Längsachse des Dübelkörpers 1 stehende Stirnfläche 13 des Fortsatzes 8 bildet die Angriffsfläche für den Schlagdorn 11 des Einschlagwerkzeuges 12.

Zur Verankerung des Befestigungselementes wird das keilförmige Spreizelement 2 mit dem Einschlagwerkzeug 12 zum vorderen Ende 14 des Dübelkörpers 1 verschoben. Dabei verkeilt sich die glatte Spreizfläche 15 des Spreizelementes 2 in der Bohrlochwandung und bewirkt somit die Verankerung des Befestigungselementes im Bohrloch 16 des Ankergrundes 17. Um eine gute Spreizwirkung und Verkeilung des Spreizelementes 2 zu erreichen, sind die Seitenränder der Spreizfläche 15 mit Einkerbungen 18 versehen. Bei der axialen Verschiebung des Spreizelementes 2 auf der Grundfläche 4 der Längsnut 3 tritt auch eine radiale Verschiebung ein. Um diese nicht zu behindern, ist die auf der Seite der Spreizfläche 15 des Spreizelementes 2 liegende Längskante 19 des Fortsatzes 8 abgesetzt und gegenüber der Längsachse des Befestigungselementes abgeschrägt. Zum leichten Ansetzen des Befestigungselementes am Bohrlochrand ist die Spreizfläche 15 des Spreizelementes 2 an seinem vorderen Bereich 22 auf den Durchmesser des Dübelkörpers 1 stufenförmig abgesetzt.

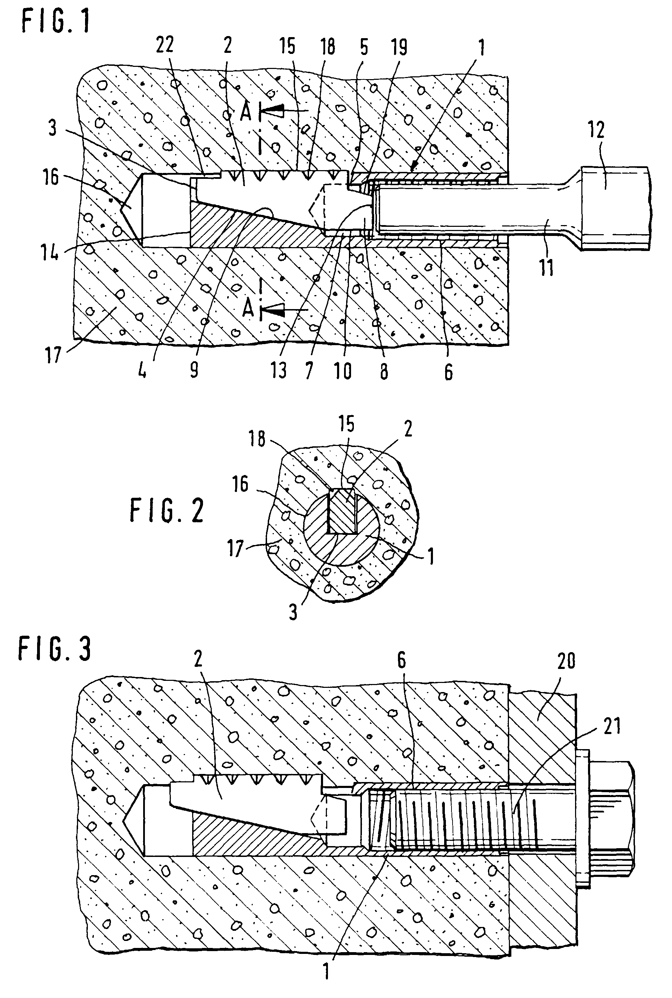

Figur 3 zeigt das erfindungsgemäße Befestigungselement im verankerten Zustand. In das Innengewinde 6 des Befestigungselementes ist zur Befestigung eines Gegenstandes 20 eine Befestigungsschraube 21 eingedreht.

## Patentansprüche

1. Befestigungselement mit einem an seinem hinteren Ende ein Innengewinde für eine Schraube aufweisenden Dübelkörper und einem keilförmigen Spreizelement, das in einer zum vorderen Ende ansteigenden und zum hinteren Ende hin durch eine Anschlagschulter begrenzten Längsnut verschiebbar geführt ist, wobei sich an das Innengewinde eine Bohrung anschließt, die sich über die Anschlagschulter hinaus bis zur Längsnut erstreckt und diese mit einem Teil ihres Querschnitts schneidet, **dadurch gekennzeichnet**, daß das Spreizelement (2) einen sich zum hinteren Ende des Dübelkörpers (1) erstreckenden und in die Bohrung (7) eingreifenden Fortsatz (8) mit einer rechtwinklig zur Längsachse des Dübelkörpers (1) stehenden Stirnfläche (13) aufweist.

2. Befestigungselement nach Anspruch 1, **dadurch gekennzeichnet**, daß die Länge der an der Auflagefläche (9) des Spreizelementes (2) sich anschließenden Längskante (10) des Fortsatzes (8) mindestens dem Eintreibweg des Spreizelementes (2) entspricht.

3. Befestigungselement nach Anspruch 1, **dadurch gekennzeichnet**, daß die sich an das Innengewinde (6) anschließende Bohrung (7) im Durchmesser der Kernbohrung des Innengewindes (6) entspricht.

4. Befestigungselement nach Anspruch 1, **dadurch gekennzeichnet**, daß das Spreizelement (2) eine glatte, den Durchmesser des Dübelkörpers (1) leicht überragende Spreizfläche (15) und Einkerbungen (18) an den Seitenrändern der Spreizfläche (15) aufweist.

5. Befestigungselement nach Anspruch 1, **dadurch gekennzeichnet**, daß die Spreizfläche (15) des Spreizelementes (2) im vorderen Bereich (22) auf den Durchmesser des Dübelkörpers (1) stufenförmig abgesetzt ist.

## Claims

1. A fixing element having a plug body with, at its rear end, an internal thread for a screw, and having a wedge-shaped expansion element which is slidably guided in a longitudinal channel ascending towards the front end and bounded at the rear end by a stop shoulder, wherein adjoining the internal thread is a bore that extends beyond the stop shoulder as far as the longitudinal channel and intersects this with part of its cross-section, **characterised in that the** expansion element (2) comprises an extension (8) extending to the rear end of the plug body (1) and engaging in the bore (7) and having an end face (13) positioned at right angles to the longitudinal axis of the plug body (1).

2. A fixing element according to claim 1, **characterised in that** the length of the longitudinal edge (10) of the extension (8) adjoining the bearing surface (9) of the expansion element (2) corresponds at least to the distance covered by the expansion element (2) as it is driven in.

3. A fixing element according to claim 1, **characterised in that** the bore (7) adjoining the internal thread (6) corresponds in diameter to the core bore of the internal thread (6).

4. A fixing element according to claim 1, **characterised in that** the expansion element (2) has a smooth expansion surface (15) projecting slightly beyond the diameter of the plug body (1), and notches (18) at the lateral edges of the expansion surface (15).

5. A fixing element according to claim 1, **characterised in that**, in the front region (22), the expansion surface (15) of the expansion element (2) is reduced stepwise to the diameter of the plug body (1).

## Revendications

1. Dispositif de fixation comportant un corps de cheville présentant à son extrémité arrière un filetage intérieur pour une vis, ainsi qu'un élément d'expansion, en forme de coin, qui est guidé, avec liberté de coulissement, dans une rainure longitudinale montant en direction de l'extrémité avant et limitée, en direction de l'extrémité arrière, par un épaulement de butée, dans le cas duquel au filetage intérieur se raccorde un perçage qui s'étend, au-delà de l'épaulement de butée, jusqu'à la rainure longitudinale et intersecte celle-ci par une partie de sa section, caractérisé par le fait que l'élément d'expansion (2) présente un prolongement (8) qui s'étend jusqu'à l'extrémité arrière du corps de cheville (1), vient, à ajustement serré, dans le perçage (7) et comporte une surface frontale (13) perpendiculaire à l'axe longitudinal du corps de cheville (1).

2. Dispositif de fixation selon la revendication 1, caractérisé par le fait que la longueur de l'arête longitudinale (10) du prolongement (8) qui se raccorde à la surface d'appui (9) de l'élément d'expansion (2) correspond au moins à la course d'introduction de l'élément d'expansion (2).

3. Dispositif de fixation selon la revendication 1, caractérisé par le fait que le perçage (7) qui se raccorde au filetage intérieur (6) correspond au diamètre du noyau du filetage intérieur (6).

4. Dispositif de fixation selon la revendication 1, caractérisé par le fait que l'élément d'expansion (2) présente une surface d'expansion lisse (15) qui dépasse légèrement le diamètre du corps de cheville (1), ainsi que des entailles (18) sur les bords latéraux de la surface d'expansion (15).

5. Dispositif de fixation selon la revendication 1, caractérisé par le fait que la surface d'expansion (15) de l'élément d'expansion (2) présente, dans la zone avant (22), un décrochement donnant une marche aboutissant au diamètre du corps de cheville (1).
